# EUROPEAN PATENT APPLICATION

(11) **EP 1 164 500 A1**
(43) Date of publication of application: **19.12.2001**
(21) Application number: 00610061.4
(22) Date of filing: 16.06.2000
(51) Int. Cl.: G06F 17/30, G06F 17/60

(54) **Treestructured dataobjects**

(71) Applicant: PressYes ApS, 8260 Viby J (DK)
(72) Inventor: Houbak, Lars, 9380 Vestbjerg (DK); Shapshak, Karl Johan M. B., 28224 Pozuelo de Alarcon (ES)
(74) Representative: Boesen, Johnny Peder

(57) **Abstract**

This invention concerns a database (3) containing data objects (4) for communication devices (1). The scope of the invention is to provide a marketing and sales system using a communication device (1). This can be reached by a method, where the information transmitted (6) to the communicating device (1) is organized in a tree structure, where the tree structure is comprised of navigation nodes and information nodes (5), where each data object (4) contains user entered data and information from the use of information nodes (5) and navigation nodes. This allows the transmission to a communication device (1) of an efficient custom information and navigation structure.

## Description

The invention concerns a method for data transmission to and from a number of communication devices, where the communication devices are communicating with a database via a network, where the database contains data objects for each communication device.

Communication in that form is known from normal mobile phone communication with a network.

The scope of the invention is to provide a marketing and sales system using a communication device.

This can be reached by a method where the data transmitted to the communicating device is organized in a tree structure, where the tree structure is comprised of navigation nodes and information nodes, where each data object contains user entered data and information from the use of information and navigation nodes.

By using a tree structure, the user is able to select information of interest from a large number of information elements. At the same time, information that is not interesting for the user is kept away.

This allows the transmission to a communication device of an efficient custom information and navigation structure.

The tree structure might comprise menu points. This allows the user to get an easy access to communication with a database.

The information nodes can comprise an offer, which can be accepted by a response. In this way the users attention is moved towards the offer, and not towards other products.

Information nodes might also be navigation nodes. In this way the user not only receives offers, but is also able to make a purchase.

The tree structure may have entry points, which are stored in the communication device. The entry points will ensure a simple and efficient menu system, where the user might be guided through various selections.

The database may contain network information, i.e. user identity, time of event, location etc. This kind of information opens up for various possibilities, such as confirming personal identity, electronic dating of purchase orders, selecting possible customers in an area etc.

The entry points may be requested by sending a word. I.e. a word can be a text word, a code for a location, a code for a concept, a word for a merchant brand, a word for a product, an item ID, a merchant ID or an address. This will instantly provide the user with the requested information in a simple and efficient way.

Entry points may be sent automatically when specific conditions are met in the database. This will ensure an efficient way of guiding the user through interdependent menu selections.

The database may be accessed from secondary devices (e.g. external devices) by identifying an ID of a primary device (e.g. a communication device). Not only could this be used for bank accounting, but other kinds of information could also be accessed upon identifying a primary device ID.

Different communication devices may access the database by using a common identifying data segment. This will efficiently make a common approach for ID validation, and in general limit the need for storing information in other devices than the database.

The identifying data segment may comprise a personal ID, which is combined with an offer response to create a coupon, which is authenticated at a point of redemption. This will ensure only registering fully authenticated electronic requests at the point of redemption.

The coupon may be a ticket if the offer is accepted for purchase by a user and the database. This will allow the registered and fully authenticated electronic requests to be processed as purchase orders at the time the offer is accepted by the user.

The identifying data segment may comprise a personal ID, which is combined with a ticket code to create a digital ticket, which is authenticated at the point of redemption. This will assure accurate and secure transactions.

Viewing an offer may credit a user account with value. This can be used to draw user attention to certain offers.

Using an offer may credit the user account with value. This method can be used in correcting the offer price for a possible discount.

Exchanging an offer between at least 2 communication devices via the database may credit the user account with value. This method can be used to credit the user account for passing on an offer to another potential customer.

Forwarding an offer between at least 2 communication devices via the database may credit the user account with value. This method can be used to credit the user account, for passing on an offer.

There may be a link between the database and a customer institution. The link can be used to debit and credit the user.

There may be a link between the database and a merchant. The link can be used to authenticate the digital ticket.

The information from the network may contain data elements such as location, model, authentication codes, profile information, etc. In this way various types of information relevant for the transaction can be provided.

The information from the communication device may contain data elements such as location, model, authentication codes, profile information, etc. In this way various types of information relevant for the transaction can be provided.

Location may be used for customizing the information nodes and navigation nodes transmitted to the communication device. The location can be used in filtering information and defining navigation nodes of relevance for the user.

Third parties may access and change the data objects of information nodes from a communication device. This will give the opportunity for third parties to update/change user data objects such as offers, triggers and navigational location.

The communication devices may be wireless. This will make it possible to implement the previous described methods on mobile equipment such as mobile telephones.

A user registration may be moved into different groups based on the user selection of menu points/informational groups as a method of allowing merchants and the database administrator to control a feedback system of the information nodes and navigation nodes, which consequently is distributed to the communication device. This method will provide an improved efficiency in the network in general, but will also be a method of selecting information/subjects of relevance for the user based on previous information/history.

In the following the invention is further detailed with reference to the figures, where
figure 1 shows a block diagram, illustrating the information flow between a communication device and a database, and the information contained in the database relevant for the invention.
figure 2 shows a block diagram, which is the block diagram from figure 1, extended with a data link between the communication device and an external device, and a data link between the external device and the database.

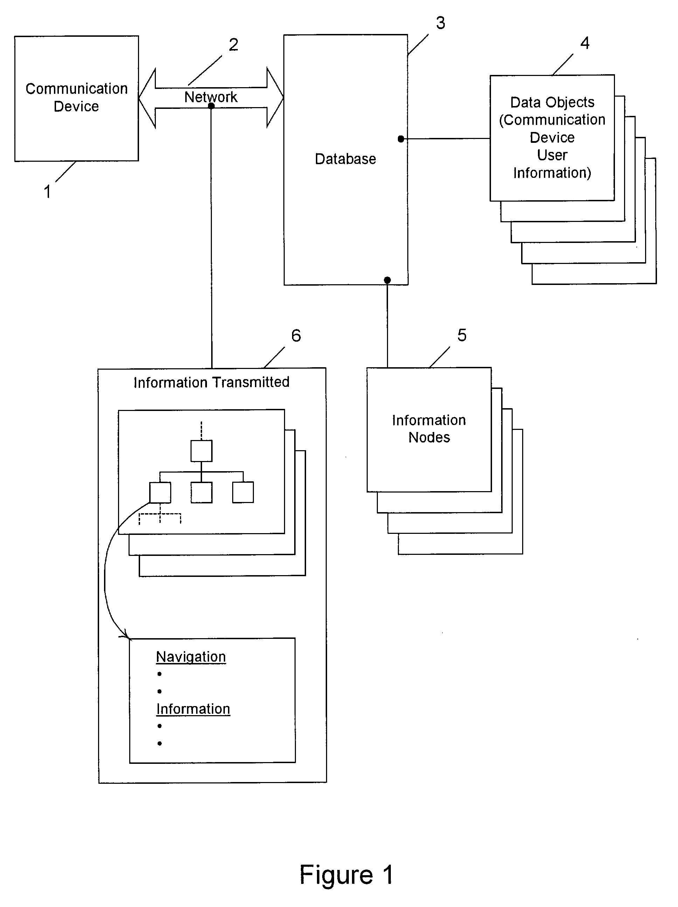

Figure 1 shows a block diagram, illustrating the information flow between a user communication device 1 and a database 3, and the information contained (4 and 5) in the database 3. The user communication device 1 is connected to the database 3 via a network 2. The information 6 exchanged between the user communication device 1 and the database 3 is information as well as navigation information organized in a tree structure. The database 3 contains various types of user information 4 collected from the communication device 1. The database 3 contains information as well as navigation information, which are organized in a tree structure, in information nodes 5.

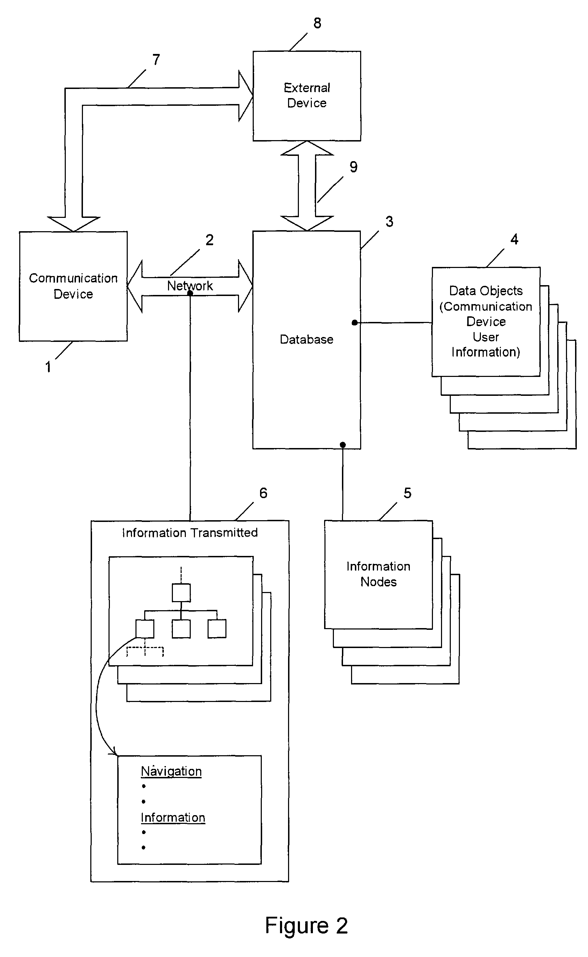

Figure 2 shows a block diagram, which is the block diagram from figure 1, extended with a data link 7 between the communication device 1 and an external device 8, and a data link 9 between the external device 8 and the database 3. The user communication device 1 is connected to the database 3 via a network 2. The information 6 exchanged between the user communication device 1 and the database 3, is information as well as navigation information organized in a tree structure. The database 3 contains various types of user information 4 collected from the communication device 1. The database 3 contains information as well as navigation information, which are organized in a tree structure, in information nodes 5. The user communication device 1 is connected to an external device 8 via a data link 7. The external device 8 is connected to the database 3 via a data link 9.

## Claims

1. A method for data transmission to and from a number of communication devices (1), where the communication devices (1) are communicating with a database (3) via a network (2), where the database (3) contains data objects (4) for each communication device (1) and data objects for a number of information nodes (5), **characterized in, that** the information transmitted (6) to the communication device (1) is organized in a tree structure, which tree structure is comprised of navigation nodes and information nodes (5), where the data object (4) contains user-entered data and information from the use of information nodes (5) and information from the use of navigation nodes.

2. A method according to claim 1, **characterized in, that** the tree structure comprises menu points.

3. A method according to claim 1 or 2 **characterized in, that** the information nodes (5) comprise an offer, which can be accepted by a response.

4. A method according to anyone of claims 1-3 **characterized in, that** some of the information nodes (5) are navigation nodes.

5. A method according to any of the claims 1-4 **characterized in, that** the tree structure has entry points, which are stored in the communication device (1).

6. A method according to any of the claims 1-5 **characterized in, that** the database (3) contains network (2) information.

7. A method according to claim 5 **characterized in, that** the entry points are requested by sending a word.

8. A method according to any of the claims 5 or 7 **characterized in, that** entry points are sent automatically when specific conditions are met in the database (3).

9. A method according to any of the claims 1-8 **characterized in, that** the database (3) is accessed from secondary devices (e.g. external devices (8)) by identifying an ID of a primary device (e.g. a communication device (1)).

10. A method according to any of the claims 1-9 **characterized in, that** different communication devices (1) access the database (3) by using a common identifying data segment.

11. A method according to claim 10 **characterized in, that** the identifying data segment comprises a personal ID, which is combined with an offer response to create a coupon, which is authenticated at a point of redemption.

12. A method according to claim 11 **characterized in, that** the coupon is a ticket if the offer is accepted for purchase by a user and the database (3).

13. A method according to any of the claims 10-12 **characterized in, that** the identifying data segment comprises a personal ID, which is combined with a ticket code to create a digital ticket, which is authenticated at the point of redemption.

14. A method according to any of the claims 1-13 **characterized in, that** viewing an offer will credit a user account with value.

15. A method according to any of the claims 1-14 **characterized in, that** using an offer will credit the user account with value.

16. A method according to any of the claims 1-15 **characterized in, that** exchanging an offer between at least 2 communication devices (1) via the database (3) will credit the user account with value.

17. A method according to any of the claims 1-16 **characterized in, that** forwarding an offer between at least 2 communication devices (1) via the database (3) will credit the user account with value.

18. A method according to any of the claims 1-17 **characterized in, that** there is a link between the database (3) and a customer institution, which debits and credits the user.

19. A method according to any of the claims 1-18 **characterized in, that** there is a link between the database (3) and a merchant to authenticate the digital ticket.

20. A method according to any of the claims 1-19 **characterized in, that** the information from the network (2) contains at least one of the following information elements: location, model, authentication codes and profile information.

21. A method according to any of the claims 1-20 **characterized in, that** the information from the communication device (1) contains at least one of the following information elements: location, model, authentication codes, and profile information.

22. A method according to any of the claims 1-21 **characterized in, that** location is used for customizing the information nodes and navigation nodes transmitted to the communication device (1).

23. A method according to any of the claims 1-22 **characterized in, that** third parties can access and change the data objects of information nodes (5) from a communication device (1).

24. A method according to any of the claims 1-23 **characterized in, that** the communication devices (1) are wireless.

25. A method according to anyone of claims 1-24 **characterized in, that** a user registration is moved into different groups based on the user selection of menu points/informational groups as a method of allowing merchants and the database (3) administrator to control a feedback system of the information nodes (5) and navigation nodes, consequently distributed to the communication device (1).
